# EUROPEAN PATENT SPECIFICATION

(11) **EP 3 784 567 B1**
(45) Date of publication and mention of the grant of the patent: **07.06.2023**
(21) Application number: 18916893.3
(22) Date of filing: 26.04.2018
(51) Int. Cl.: B64C 1/14

(54) **DOOR LATCH SECURING DEVICE FOR AERIAL VEHICLE AND METHOD OF SECURING A DOOR STRUCTURE TO A FUSELAGE SKIN STRUCTURE OF AN AERIAL VEHICLE**
TÜRVERRIEGELUNGSSICHERUNGSVORRICHTUNG FÜR EIN LUFTFAHRZEUG UND VERFAHREN ZUR SICHERUNG EINER TÜRSTRUKTUR AN EINER RUMPFHAUTSTRUKTUR EINES LUFTFAHRZEUGS
DISPOSITIF DE FIXATION DE VERROU DE PORTE POUR VÉHICULE AÉRIEN ET PROCÉDÉ DE FIXATION D'UNE STRUCTURE DE PORTE À UNE STRUCTURE DE REVÊTEMENT DE FUSELAGE D'UN VÉHICULE AÉRIEN

(43) Date of publication of application: 03.03.2021
(73) Proprietor: SAAB AB, 581 88 Linköping (SE)
(72) Inventor: SCHUSTER, Samuel, 582 42 Linköping (SE); STENDAL, Marcus, 566 36 Habo (SE); ALBERTSSON, Peter, 554 51 Jönköping (SE)
(74) Representative: Zacco Sweden AB
(86) International application number: PCT/SE2018/050427
(87) International publication number: WO 2019/209150

(56) References cited:
- WO-A1-2009/059808
- GB-A- 2 144 484
- US-A- 4 395 000
- US-A- 4 395 000
- US-A- 4 715 562
- US-A- 5 064 147
- US-A1- 2010 059 628
- US-A1- 2011 315 822
- US-B1- 6 454 210

## Description

### TECHNICAL FIELD

The present invention relates to an aerial vehicle comprising a fuselage skin structure and at least a door structure, which is configured to be closable arranged in an aperture of the fuselage skin structure and secured to (latched and locked) the fuselage skin structure. The invention also relates to a method of securing the door structure to the fuselage skin structure.

The present invention concerns the aerial vehicle industry manufacturing door latch fitting securing devices for aerial vehicles.

The present invention also may concern the aerial vehicle industry manufacturing door structures for aerial vehicles.

### BACKGROUND

Current technology as published uses door latch fitting securing devices that are bulky and/or mounted in the door structures per se. Current door latch fitting securing devices are arranged in the door structures per se resulting in that the structure of the door structure must include additional reinforcement stiffeners, ribs and/or beams for withstanding internal forces acting on the door structure, which in turn will add weight to the aerial vehicle.

US4395000 A discloses a door of an aircraft having a locking mechanism for securing the door to the fuselage. In GB2511159 A a longitudinal shaft having locking brackets is rotated about its longitudinal axis and is fixed by means of a locking plate.

### SUMMARY OF THE INVENTION

An object of the present disclosure is to provide an aerial vehicle comprising at least a door structure, which is configured to be closable arranged in an aperture of a fuselage skin structure of the aerial vehicle and which door structure is safely latched and locked when it is closed to the fuselage skin structure, and to provide that the door structure is of low weight and that the door latch fitting securing device is less bulky than prior art technologies.

An object is to provide an aerial vehicle comprising an aerial vehicle door latch fitting securing device, that is of low weight and that is less bulky than prior art latch fitting securing devices.

An object is to provide an aerial vehicle comprising an aerial vehicle door latch fitting securing device, that promotes safe handling in regard to safely latching the door structure to the fuselage skin structure when it is closed.

An object is to provide an aerial vehicle that is of lower weight than prior art aerial vehicles having closable door structures.

At least one of said objects is obtained by an aerial vehicle comprising a fuselage skin structure and at least a door structure, which is configured to be closable arranged in an aperture of the fuselage skin structure and secured to the fuselage skin structure, the fuselage skin structure comprises an aperture perimeter surrounding the aperture, at least one stationary latch fitting is arranged at the door structure, wherein at least a portion of the aperture perimeter comprises;
- a door latch fitting securing device comprising at least one elongated latch bar configured for linear motion and engagement with the stationary latch fitting in a latched position when the door structure is closed;
- the door latch fitting securing device further comprises a rotatable lock member configured for rotary motion for engagement with and for locking the elongated latch bar in the latched position;
- an actuator device is coupled to the door latch fitting securing device via a translation mechanism configured to convert rotary motion of the actuator device (19) into said linear motion and into said rotary motion.

In such a way is achieved that the aerial vehicle can be of lower weight as one single rotary electrical motor and/or single action handle mechanism can be used for moving the elongated latch bar in linear motion and used for rotating the rotatable lock member.

Alternatively, the rotary electrical motor and/or single action handle mechanism can be configured as a single rotary electrical motor being a part of the door latch fitting securing device.

The use of one single rotary electrical motor and/or single action handle mechanism will provide a less bulky door latch fitting securing device.

The aperture perimeter may be defined as an area of the fuselage skin structure formed within a first imaginary line surrounding the aperture, which area extends between the first imaginary line and a second imaginary line running within and or adjacent the perimeter of the door structure.

By arranging the door latch fitting securing device to the aperture perimeter of the fuselage skin structure, the door structure can be made lighter.

Alternatively, the elongated latch bar is arranged in a lower edge region of the aperture perimeter and is configured to be moved in a direction corresponding with the flight direction of the aerial vehicle.

In such way is achieved that the door latch fitting securing device can be made less bulky in the fuselage skin structure at the same time as the structural properties of the door latch fitting securing device per se can be used for reinforcing door sill structures of the fuselage skin structures.

Alternatively, the door latch fitting securing device is mounted to the lower edge region of the aperture perimeter and extends in the longitudinal direction of the aerial vehicle.

Alternatively, the door latch fitting securing device is fully or at least with its majority of parts mounted to the lower edge region of the aperture perimeter of the fuselage skin structure and extends in the longitudinal direction of the aerial vehicle.

In such way is achieved that a longeron structure or other internal structures of the aerial vehicle extending through the lower edge region of the aperture perimeter can be designed with less reinforcement and made lighter as the elongated door latch fitting securing device per is configured to take up internal forces, which appear in the fuselage skin structure during flight.

Alternatively, the door latch fitting securing device is configured as a modular unit comprising; at least one stationary latch fitting arranged at the door structure; the door latch fitting securing device; the elongated latch bar; the rotatable lock member; the translation mechanism; and the single actuator device (e.g a single rotary electrical motor).

Alternatively, the translation mechanism comprise a rotary drive part, which is configured to drive a first driven part and which is configured to drive a second driven part, each part being configured to be intermittently and independently driven.

Alternatively, the first driven part is coupled to the elongated latch bar via a first linkage arrangement and the second driven part is coupled to the rotatable lock member via a second linkage arrangement.

Alternatively, the rotary drive part comprises a drive wheel or a drive crank of a Geneva mechanism.

Alternatively, the elongated latch bar comprises a recess exposing an engagement surface configured for engagement with the stationary latch fitting.

Alternatively, the rotatable lock member is configured to be moved into the recess of the elongated latch bar for locking the elongated latch bar in the latched position.

Alternatively, the rotary drive part comprises a double dwell cam arrangement comprising a first rise-dwell cam surface section and a second rise-dwell cam surface section, each configured for engagement with the respective first and second driven part.

Alternatively, the first driven part comprises a first cam follower configured to follow the first rise-dwell cam surface section.

Alternatively, the second driven part comprises a second cam follower configured to follow the second rise-dwell cam surface section.

Alternatively, the first cam follower is coupled to the elongated latch bar.

Alternatively, the second cam follower is coupled to the rotatable lock member.

Alternatively, the first driven part comprises a first Geneva output rotary part and the second driven part comprises a second Geneva output rotary part.

Alternatively, the drive wheel or drive crank comprises a first elevated circular blocking disc configured to hold the first Geneva output rotary part in a first position during a first holding period, during which first holding period the elongated latch bar is held in a first stationary position, even though the drive wheel rotates.

Alternatively, the drive wheel or drive crank comprises a second elevated circular blocking disc configured to hold the second Geneva output rotary part in a second position during a second holding period, during which second holding period the rotatable lock member is held in a second stationary position, even though the drive wheel rotates.

Alternatively, the first elevated circular blocking disc is formed on a first drive wheel face of the drive wheel or drive crank and the second elevated circular blocking disc is formed on a second drive wheel face of the drive wheel or drive crank.

Alternatively, during the first holding period, a first sliding surface of the first elevated circular blocking disc engages in a sliding manner a corresponding first slide surface of the first Geneva output rotary part.

Alternatively, during the second holding period, a second sliding surface of the second elevated circular blocking disc engages in a sliding manner a corresponding second slide surface of the second Geneva output rotary part.

Alternatively, the first drive wheel face is opposite the second drive wheel face.

Alternatively, the drive wheel or drive crank comprises a first pin configured for engagement with a first slot of the first Geneva output rotary part.

Alternatively, the drive wheel or drive crank comprises a second pin configured for engagement with a second slot of the second Geneva output rotary part.

Alternatively, the first pin of the drive wheel or drive crank is configured to enter the first slot and to move the first Geneva output rotary part for providing a first intermittent motion of the first Geneva output rotary part into the first position during the first holding period.

Alternatively, the second pin of the drive wheel or drive crank is configured to enter the second slot and to move the second Geneva output rotary part for providing a second intermittent motion of the second Geneva output rotary part into the second position during the second holding period.

Alternatively, the first pin is arranged on the first drive wheel face and the second pin is arranged on the second drive wheel face.

Alternatively, the actuator device comprises a rotary electrical motor and/or a single action handle mechanism.

Alternatively, the rotary electrical motor is directly coupled to the drive wheel or drive crank.

Alternatively, the single action handle mechanism is directly coupled to the drive wheel or drive crank.

Alternatively, the first Geneva output rotary part is coupled to a first end of a first connecting rod.

Alternatively, a second end of the first connecting rod is coupled to a first arm of a first angular lever.

Alternatively, a second arm of the first angular lever is coupled to the elongated latch bar via a first intermediate linkage, configured to provide two degrees of freedom.

Alternatively, the second Geneva output rotary part is coupled to a first end of a second connecting rod.

Alternatively, a second end of the second connecting rod is coupled to a crank member or crank arm of the rotatable lock member.

Alternatively, the elongated latch bar is configured to be journaled in a linear-motion bearing or linear slide for providing free motion in one direction along a first axis corresponding with the flight direction of the aerial vehicle.

Alternatively, the rotatable lock member is configured to be rotatable about a second axis.

Alternatively, the first axis may be arranged parallel to the second axis.

A further object of the present disclosure is to provide a method of securing a door structure to a fuselage skin structure of an aerial vehicle.

At least one of said objects is obtained by a method of securing a door structure to a fuselage skin structure of an aerial vehicle, the door structure is configured to be closable arranged in an aperture of the fuselage skin structure, which comprises an aperture perimeter surrounding the aperture, at least one stationary latch fitting is arranged at the door structure, at least a portion of the aperture perimeter comprises a door latch fitting securing device arranged to the aperture perimeter and comprising at least one elongated latch bar configured for linear motion for engagement of the stationary latch fitting in a latched position when the door structure is closed, the door latch fitting securing device further comprises a rotatable lock member configured for rotary motion for engagement with and for locking the elongated latch bar in the latched position, an actuator device is coupled to the door latch fitting securing device via a translation mechanism configured to convert rotary driving motion of the actuator device the linear motion and into the rotary motion, the method comprises the steps of; closing the door structure; activating the actuator device; converting the rotary driving motion of the actuator device into the linear motion in a first intermittent motion; converting the rotary driving motion of the actuator device into the rotary motion in a second intermittent motion; wherein the first intermittent motion precedes the second intermittent motion.

Alternatively, the translation mechanism comprises a rotary drive part associated with or coupled to a first driven part and to a second driven part, wherein an exemplary method comprises the steps of; rotating the rotary drive part; bringing into motion the first driven part by means of the rotary drive part for moving the elongated latch bar into a first position during a first holding period; holding in the first position the elongated latch bar; bringing into motion the second driven part by means of the rotary drive part for moving the rotatable lock member into a second position during a second holding period.

Alternatively, the drive wheel comprises a first pin configured for engagement with a first slot of the first driven part and comprises a second pin configured for engagement with a second slot of the second driven part; wherein an exemplary method comprises the steps of; entering the first pin into the first slot for providing a first intermittent motion of the first driven part into the first position; entering the second pin into the second slot for providing a second intermittent motion of the second driven part into the second position.

The wording of "door structure" may be replaced by the wording "aircraft door" or "cargo door".

The wording of "door latch fitting securing device" may be replaced by the wording "door securing means" and may be interpreted as a device that is configured to latch and lock a door structure to a fuselage skin structure in closed position.

The wording "the fuselage skin structure" may be replaced by the wording "aircraft fuselage" or "fuselage structure".

The aperture perimeter may include a feature that the aperture perimeter comprises an area surrounding the aperture.

The area surrounding the aperture may be defined as a circumference area limited by a first imaginary line and a second imaginary line.

The first imaginary line may be defined as an imaginary line drawn entirely or partly around the aperture and over a section of the fuselage skin structure.

The second imaginary line may be defined as an imaginary line drawn entirely or partly within the perimeter of the door structure.

The second imaginary line may be defined as an imaginary line drawn entirely or partly at the boundary between the door structure and the fuselage skin structure.

The aperture perimeter may comprise a portion of the door latch fitting securing device.

The aperture perimeter may comprise a portion of the stationary latch fitting.

The respective pin of the drive wheel or drive crank may be configured as a respective roller pin.

Alternatively, the translation mechanism is configured to convert the rotary driving motion of the actuator device into the linear motion and into the rotary motion in such way that the second intermittent motion precedes the first intermittent motion.

Alternatively, the aerial vehicle comprises a fuselage skin structure and at least a door structure, which is configured to be closable arranged in an aperture of the fuselage skin structure and secured to the fuselage skin structure, the fuselage skin structure comprises an aperture perimeter surrounding the aperture, at least one stationary latch fitting is arranged at the door structure, wherein at least a portion of the aperture perimeter comprises; a door latch fitting securing device comprising at least one elongated latch bar configured for rotational motion and engagement with the stationary latch fitting in a latched position when the door structure is closed; the door latch fitting securing device further comprises a lock member configured for linear motion for engagement with and for locking the elongated latch bar in a latched position; an actuator device is coupled to the door latch fitting securing device via a translation mechanism configured to convert rotary motion of the actuator device into said rotary motion and into said linear motion.

Alternatively, the aerial vehicle may be a commercial aircraft.

In such way is achieved simplified and secure handling in operation when latching and locking a door structure of a commercial aircraft is made. By means of a single rotary electrical motor or a single action handle mechanism, the operation will be simplified as is required in regard to safety aspects associated with commercial aircraft.

### BRIEF DESCRIPTION OF THE DRAWINGS

The disclosure of this document will now be described by way of examples with references to the accompanying schematic drawings, of which:
Fig. 1a illustrates an aerial vehicle according to a first example;
Fig. 1b illustrates an alternatively defined area of an aperture perimeter;
Figs. 2a-2c illustrate a door latch fitting securing device arranged to the aperture perimeter of an aerial vehicle according to a second example;
Fig. 3 illustrates a door latch fitting securing device arranged to the aperture perimeter of an aerial vehicle according to a third example;
Fig. 4 illustrates a door latch fitting securing device arranged to the aperture perimeter of an aerial vehicle according to a fourth example;
Fig. 5 illustrates a door latch fitting securing device arranged to the aperture perimeter of an aerial vehicle according to a fifth example;
Fig. 6 illustrates a flowchart showing an exemplary method for securing a door structure to a fuselage skin structure of an aerial vehicle;
Fig. 7 illustrates a flowchart showing an exemplary method for securing a door structure to a fuselage skin structure of an aerial vehicle;
Fig. 8 illustrates a flowchart showing an exemplary method for securing a door structure to a fuselage skin structure of an aerial vehicle; and
Figs. 9a-9e illustrate a further exemplary method for securing a door structure to a fuselage skin structure of an aerial vehicle.

### DETAILED DESCRIPTION

Hereinafter, examples of the present disclosure will be described in detail with reference to the accompanying drawings, wherein for the sake of clarity and understanding some details of no importance may be deleted from the drawings. Some details may have the same reference number but may relate to different examples.

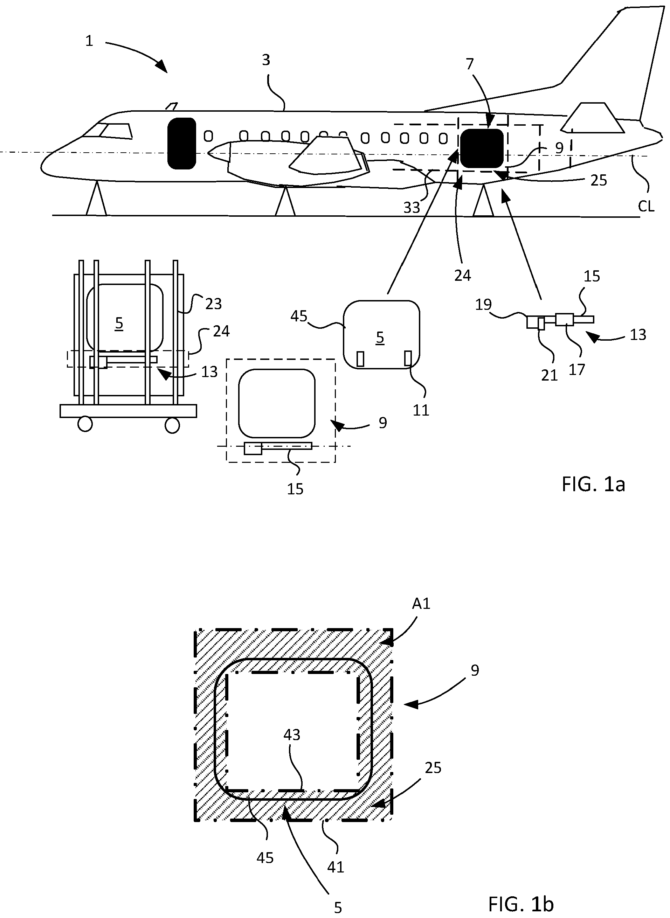

Fig. 1a illustrates an aerial vehicle 1 according to a first example. The aerial vehicle 1 comprises a fuselage skin structure 3 and a door structure 5. The door structure 5 is configured to be closable arranged in an aperture 7 of the fuselage skin structure 3 of the aerial vehicle 1. When the door structure 5 is closed in position to the fuselage skin structure 3, it is secured to the fuselage skin structure 3. The fuselage skin structure 3 further comprises an aperture perimeter 9 surrounding the aperture 7. A stationary latch fitting 11 is arranged at the door structure. The aperture perimeter 9 comprises a door latch fitting securing device 13 arranged to the aperture perimeter 9. The aperture perimeter 9 comprises an elongated latch bar 15 configured for linear motion and engagement of the stationary latch fitting 11 in a latched position, when the door structure 5 is closed. The door latch fitting securing device 13 further comprises a rotatable lock member 17 configured for rotary motion for engagement with and for locking the elongated latch bar 15 in the latched position. A rotary electrical motor 19 is coupled to the door latch fitting securing device 13 via a translation mechanism 21 configured to convert rotary motion of the rotary electrical motor 19 into the above-mentioned linear motion and rotary motion.

The door structure 5 and the door latch fitting securing device 13 may be manufactured as a modular unit configured to be assembled into the aerial vehicle 1. The door structure 5 and the door latch fitting securing device 13 (mounted in a door sill structure 24 configured to fit the aerial vehicle 1) may be manufactured beforehand in a jig 23. The door latch fitting securing device 13 may be configured as a modular unit comprising; the door latch fitting securing device 13; the elongated latch bar 15; the rotatable lock member17; the translation mechanism 21 and the single rotary electrical motor 19. At least one stationary latch fitting 11 is arranged at the door structure 5 and adjacent an outer edge 45 of the door structure 5. At least a portion of the stationary latch fitting 11 may be comprised in the aperture perimeter 9.

The elongated latch bar 15 may be arranged in a lower edge region 25 of the aperture perimeter 9 and may extend in the longitudinal direction of the aerial vehicle 1 and parallel with the centre line CL thereof. The elongated latch bar 15 may be configured to be moved in a direction corresponding with the flight direction of the aerial vehicle 1. In such way is achieved that the door latch fitting securing device 13 can be made less bulky in the fuselage skin structure 3 at the same time as the structural properties of the door latch fitting securing device 13 per se can be used for reinforcing the door sill structure 24 of the aerial vehicle 1. A longeron structure 33 of the aerial vehicle 1 extending through the lower edge region 25 of the aperture perimeter 9 can thus be made lighter as the elongated door latch fitting securing device 13 optimally is configured to take up internal forces, which exist in the fuselage skin structure 3 during flight.

Fig. 1b illustrates the definition of an exemplary extension of an aperture perimeter 9 around the door structure 5. The aperture perimeter 9 may be defined within a first imaginary line 41 surrounding the aperture (reference 7 in Fig. 1a) and may be defined as an area A1 extending between the first imaginary line 41 and a second imaginary line 43 running within the perimeter of the door structure 5 or inside the outer edge 45 of the door structure 5.

The aperture perimeter 9 may also be defined as an area (not shown) extending between the first imaginary line 41 and a second imaginary line running along the outer edge of the door structure 5.

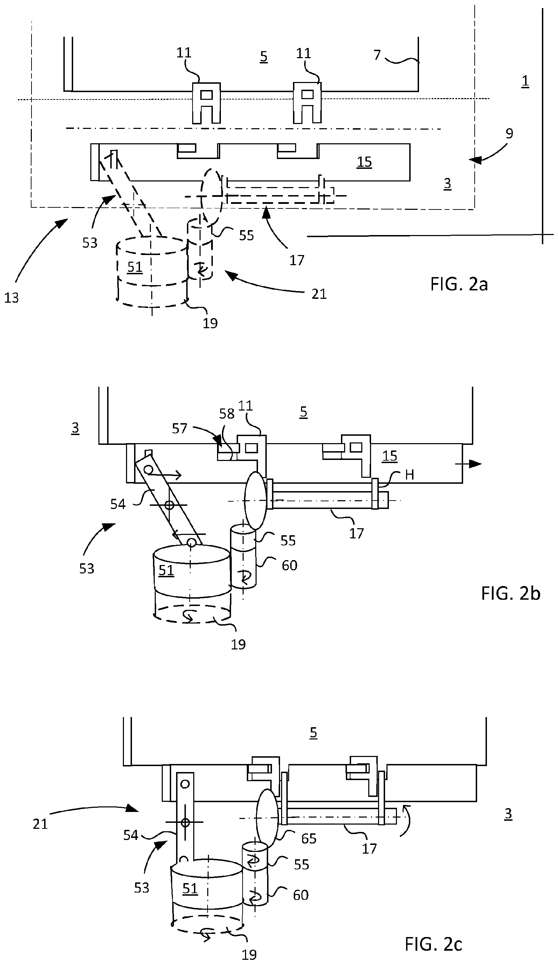

Figs. 2a-2c illustrate a door latch fitting securing device 13 arranged to the aperture perimeter 9 of an aerial vehicle 1 (partly shown) according to a second example.

Fig. 2a illustrates the aerial vehicle 1 (a portion of which is shown) comprising a fuselage skin structure 3 and a door structure 5, which is configured to be closable arranged in an aperture 7 of the fuselage skin structure 3 and secured to the fuselage skin structure 3. The fuselage skin structure 3 comprises an aperture perimeter 9 surrounding the aperture 7 and at least one stationary latch fitting 11 is arranged at the door structure 5. The aperture perimeter 9 comprises a door latch fitting securing device 13 arranged to the aperture perimeter 9 and comprising an elongated latch bar 15 configured for linear motion and engagement with the stationary latch fitting 11 in a latched position when the door structure 5 is closed. The door latch fitting securing device 13 further comprises a rotatable lock member 17 configured for rotary motion for engagement with and for locking the elongated latch bar 15 in the latched position. A rotary electrical motor 19 is coupled to the door latch fitting securing device 13 via a translation mechanism 21 configured to convert rotary motion of the rotary electrical motor 19 into the linear motion and into the rotary motion.

The translation mechanism 21 may comprise a rotary drive part 51, which is configured to drive a first driven part 53 and which is configured to drive a second driven part 55, each part being configured to be intermittently and independently driven.

Fig. 2b illustrates that the door structure 5 has been closed to the fuselage skin structure 3. The rotary electrical motor 19 is activated for propelling the elongated latch bar 15 via a lever and linkage mechanism 54 according to a first intermittent motion. The elongated latch bar 15 comprises a recess 57 exposing an engagement surface 58 configured for engagement with the stationary latch fitting 11. A clutch 60 may be arranged to the second driven part 55, which clutch 60 is configured to be out when the first driven part 53 is driven. Subsequently, the rotary motion of the rotary electrical motor 19 is converted into the rotary motion corresponding to a second intermittent motion, wherein hooks H of the rotatable lock member 17 are moved into the recess 57 of the elongated latch bar 15 for locking the elongated latch bar 15 in the latched position.

Fig. 2c illustrates that the rotary drive part 51 is coupled the second driven part 55 comprising the clutch 60 and a drive disc 65, arranged in engagement with the rotatable lock member 17. By rotating the rotary drive part 51, the lever and linkage mechanism 54 is brought into motion for moving the elongated latch bar 15 into a first position and hold it during a first holding period. Subsequently, the elongated latch bar 15 is held in the first position as the clutch 60 and a drive disc 65 arrangement is brought into motion by means of the rotary drive part 51 for moving the rotatable lock member 17 into a second position and hold it during a second holding period, wherein the door structure 5 is latched and locked to the fuselage skin structure 3.

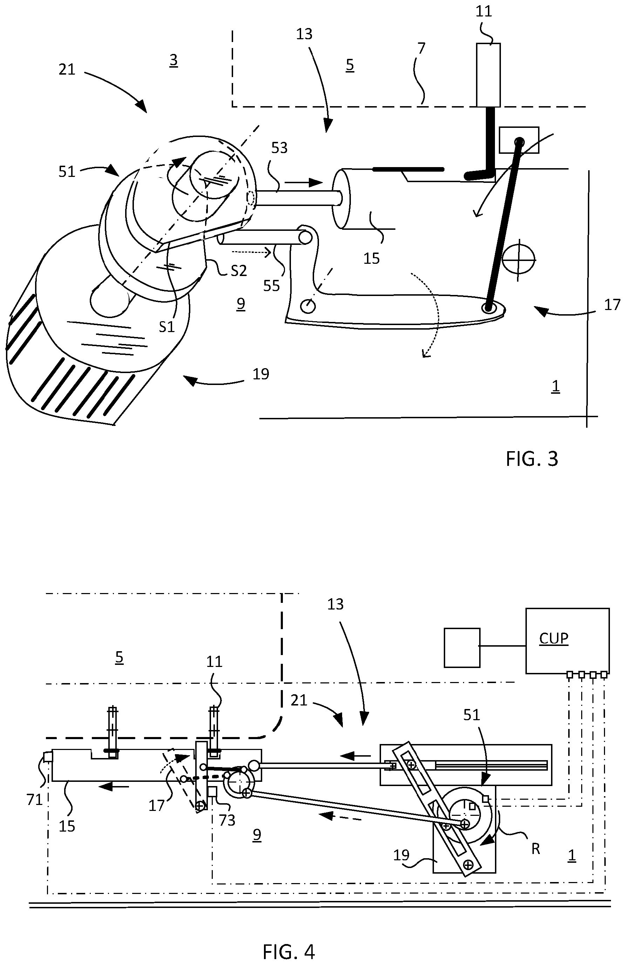

Fig. 3 illustrates a door latch fitting securing device 13 arranged to an aperture perimeter 9 (partly shown) of an aerial vehicle 1 (partly shown) according to a third example. The aerial vehicle 1 comprises a fuselage skin structure 3 (partly shown) and at least a door structure 5 (partly shown), which is configured to be closable arranged in an aperture 7 of the fuselage skin structure 3 and secured to the fuselage skin structure 3. The fuselage skin structure 3 comprises the aperture perimeter 9 surrounding the aperture 7. A stationary latch fitting 11 is arranged at the door structure 5. The aperture perimeter 7 comprises a door latch fitting securing device 13 arranged to the aperture perimeter 9. The door latch fitting securing device 13 comprises at least one elongated latch bar 15 configured for linear motion and engagement with the stationary latch fitting 11 in latched position when the door structure 5 is closed. The door latch fitting securing device 13 further comprises a rotatable lock member 17 configured for rotary motion and engagement with the elongated latch bar 15 and for locking the elongated latch bar 15 in the latched position. A single rotary electrical motor 19 is arranged in the aperture perimeter 9 and is coupled to the door latch fitting securing device 13 via a translation mechanism 21. The translation mechanism 21 is configured to convert rotary motion of the single rotary electrical motor 19 into the linear motion and into the rotary motion. The translation mechanism 21 comprises a rotary drive part 51, which is configured to drive a first cam follower (a first driven part 53) and which is configured to drive a second cam follower (a second driven part 55). The first cam follower and the second cam follower are configured to be intermittently and independently driven.

The rotary drive part 51 comprises a double dwell cam arrangement comprising a first rise-dwell cam surface section S1 and a second rise-dwell cam surface section S2, each configured for engagement with the respective first and second cam follower.

Fig. 4 illustrates a door latch fitting securing device 13 arranged to the aperture perimeter 9 of an aerial vehicle 1 (partly shown) according to a fourth example. The aperture perimeter 9 is defined as an area surrounding a door structure 5 of the aerial vehicle 1. The door latch fitting securing device 13 comprises an elongated latch bar 15 configured for linear motion and for engagement with a stationary latch fitting 11 of the door structure 5 in a latched position when the door structure 5 is closed.

The door latch fitting securing device 13 may comprise a rotatable lock member 17 configured for rotary motion and engagement with and for locking the elongated latch bar 15 in the latched position. A rotary electrical motor 19 is arranged in the aperture perimeter 9 and is coupled to the door latch fitting securing device 13 via a translation mechanism 21 configured to convert the rotary motion R of the rotary electrical motor 19 into the linear motion and into the rotary motion. The translation mechanism 21 is according to this example configured as a crank and slider mechanism.

A control unit CUP may be configured to control the motion of the translation mechanism 21 according to detected end positions of the elongated latch bar 15 and the rotatable lock member 17 respectively by means of a latch bar position sensor device 71 and a lock member position sensor device 73. The respective latch bar position sensor device 71 and lock member position sensor device 73 are coupled to the control unit CPU. The translation mechanism 21 comprises a rotary drive part 51, which is configured to drive the crank and slider mechanism. A crank part of the the crank and slider mechanism is coupled to the single rotary electrical motor 19 via a clutch mechanism (not shown). The crank mechanism is coupled to the control unit CPU for separately controlling the propulsion of the rotatable lock member 17 and the elongated latch bar 15 respectively.

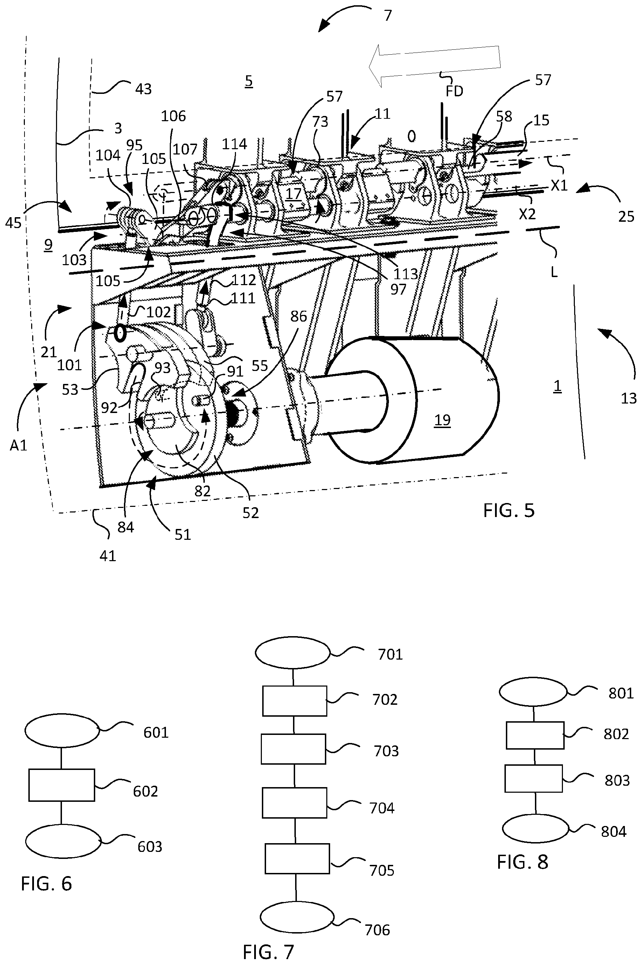

Fig. 5 illustrates a door latch fitting securing device 13 arranged to an aperture perimeter 9 of an aerial vehicle 1 (partly shown) according to a fifth example. The aerial vehicle 1 comprises a fuselage skin structure 3 and at least a door structure 5, which is configured to be closable arranged in an aperture 7 (partly shown and covered by the door structure 5) of the fuselage skin structure 3.

The door structure 5 is configured to be latched and locked (i.e. secured) to the fuselage skin structure 3. The aperture perimeter 9 is defined within a first imaginary line 41 surrounding the aperture 7. The aperture perimeter 9 may be defined as an area A1 extending between the first imaginary line 41 and a second imaginary line 43 running inside an outer edge 45 of the door structure 5.

The door latch fitting securing device 13 is mounted to a lower edge region 25 of the aperture perimeter 9 and extends in the longitudinal direction L of the aerial vehicle 1.

At least one stationary latch fitting 11 is arranged at the door structure 5. The aperture perimeter 9 may comprise a portion of the door latch fitting securing device 13. The aperture perimeter 9 may comprise a portion of the stationary latch fitting 11.

The door latch fitting securing device 13 may comprise an elongated latch bar 15, a rotatable lock member 17, a rotary electrical motor 19 and a translation mechanism 21. The rotary electrical motor 19 is configured as a part of the door latch fitting securing device 13.

The elongated latch bar 15 is configured for linear motion and is configured for engagement with the stationary latch fitting 11 in a latched position, when the door structure 5 has been closed to the fuselage skin structure. The elongated latch bar 15 may be configured to be journaled in a linear-motion bearing 73 for providing free motion in one direction along a first axis X1 corresponding with the flight direction FD of the aerial vehicle 1. The elongated latch bar 15 comprises a recess 57 exposing an engagement surface 58 configured for engagement with the stationary latch fitting 11. The rotatable lock member 17 is configured for rotary motion and engagement with the elongated latch bar 15 for locking the elongated latch bar 15 in the latched position. The rotatable lock member 17 is configured to be moved into the recess 57 of the elongated latch bar 15 for locking the elongated latch bar 15 in the latched position. The rotatable lock member 17 may be configured to be rotatable about a second axis X2, which may be arranged parallel to the first axis X1.

The elongated latch bar 15 is arranged in the lower edge region 25 of the aperture perimeter 9 and is configured to be moved in a direction corresponding with the flight direction FD of the aerial vehicle 1.

The rotary electrical motor 19 may be directly coupled to the door latch fitting securing device 13 via the translation mechanism 21 configured to convert rotary motion of the rotary electrical motor 19 into the linear motion and into the rotary motion.

The translation mechanism 21 comprises a rotary drive part 51, which is configured to drive a first driven part 53 and which is configured to drive a second driven part 55, each part being configured to be intermittently and independently driven. The rotary drive part 51 comprises a drive wheel 52 and is configured as a drive crank of a Geneva mechanism. The first driven part 53 is configured as first Geneva output rotary part and the second driven part 55 is configured as a second Geneva output rotary part.

The drive wheel 52 comprises a first elevated circular blocking disc 82 configured to hold the first Geneva output rotary part (the first driven part 53) in a first position during a first holding period, during which first holding period the elongated latch bar 15 is hold in a first stationary position, even though the drive wheel 52 rotates.

The drive wheel 52 comprises a second elevated circular blocking disc (not shown) arranged at the other side of the drive wheel 52 and configured to hold the second Geneva output rotary part (the second driven part 55) in a second position during a second holding period, during which second holding period the rotatable lock member is hold in a second stationary position, even though the drive wheel rotates. The first elevated circular blocking disc 82 is formed on a first drive wheel face 84 of the drive wheel 52 and the second elevated circular blocking disc is formed on a second drive wheel face 86 of the drive wheel 52. The first drive wheel face 84 is opposite the second drive wheel face 86.

The drive wheel 52 comprises a first pin 91 (arranged on the first drive wheel face 84) configured for engagement with a first slot 92 of the first Geneva output rotary part and comprises a second pin 93 (arranged on the second drive wheel face 86) configured for engagement with a second slot (not shown) of the second Geneva output rotary part. The first pin 91 of the drive wheel 52 is configured to enter the first slot 92 and to move the first Geneva output rotary part for providing a first intermittent motion of the first Geneva output rotary part into the first position during the first holding period. The second pin 93 of the drive wheel 52 is configured to enter the second slot and to move the second Geneva output rotary part for providing a second intermittent motion of the second Geneva output rotary part into the second position during the second holding period.

The first Geneva output rotary part (the first driven part 53) is coupled to the elongated latch bar 15 via a first linkage arrangement 95 and the second Geneva output rotary part (the second driven part 55) is coupled to the rotatable lock member 17 via a second linkage arrangement 97. Furthermore, the first Geneva output rotary part is coupled to a first end 101 of a first push rod 102 and a second end 103 of the first push rod 102 is coupled to a first arm 104 of a first angular lever 105. A second arm 106 of the first angular lever 105 is coupled to the elongated latch bar 15 via a first intermediate linkage 107, configured to provide two degrees of freedom. The second Geneva output rotary part is coupled to a first end 111 of a second push rod 112. A second end 113 of the second push rod 112 is coupled to a crank arm 114 of the rotatable lock member 17.

Fig. 6 illustrates a flowchart showing an exemplary method for securing a door structure to a fuselage skin structure of an aerial vehicle. The door structure is configured to be closable arranged in an aperture of the fuselage skin structure, which comprises an aperture perimeter surrounding the aperture, at least one stationary latch fitting is arranged at the door structure, the aperture perimeter comprises a door latch fitting securing device arranged to the aperture perimeter and comprising at least one elongated latch bar configured for linear motion for engagement with the stationary latch fitting in a latched position when the door structure is closed, the door latch fitting securing device further comprises a rotatable lock member configured for rotary motion for engagement with and for locking the elongated latch bar in the latched position, a rotary electrical motor is coupled to the door latch fitting securing device via a translation mechanism configured to convert rotary driving motion of the rotary electrical motor into the linear motion and into the rotary motion.

The method comprises Step 601 for starting the method. In Step 602 the method is performed. In Step 603 the method stops.

Step 602 may comprise the steps of closing the door structure; activating the rotary electrical motor; converting the rotary driving motion of the rotary electrical motor into the linear motion in a first intermittent motion; converting the rotary driving motion of the rotary electrical motor into the rotary motion in a second intermittent motion; wherein the first intermittent motion precedes the second intermittent motion.

Fig. 7 illustrates a flowchart showing a further exemplary method for securing a door structure to a fuselage skin structure of an aerial vehicle, wherein the translation mechanism comprises a rotary drive part coupled to a first driven part and to a second driven part. In Step 701 the method starts. In Step 702 is provided rotating of the rotary drive part. In Step 703 is brought into motion the first driven part by means of the rotary drive part for moving the elongated latch bar into a first position during a first holding period. In Step 704 the elongated latch bar is held in the first position. In Step 705 is brought into motion the second driven part by means of the rotary drive part for moving the rotatable lock member into a second position during a second holding period. In Step 706 the method stops.

Fig. 8 illustrates a flowchart showing a further exemplary method for securing a door structure to a fuselage skin structure of an aerial vehicle, wherein the rotary drive part comprises a first pin configured for engagement with a first slot of the first driven part and comprises a second pin configured for engagement with a second slot of the second driven part. In Step 801 the method starts. In Step 802 the first pin is entered into the first slot for providing the first intermittent motion of the first driven part into the first position. In Step 803 the second pin is entered into the second slot for providing the second intermittent motion of the second driven part into the second position. In Step 804 the method stops.

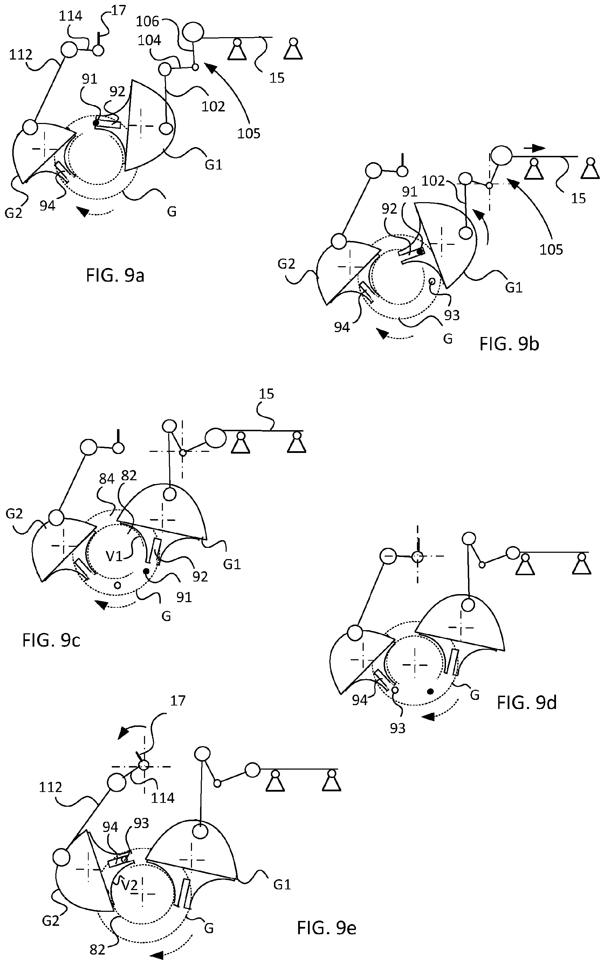

Figs. 9a-9e illustrates a further exemplary method for securing a door structure to a fuselage skin structure of an aerial vehicle. The door structure has been closed to the fuselage skin structure. A translation mechanism comprises a rotary Geneva drive part G coupled to a first Geneva output rotary part G1 and to a second Geneva output rotary part G2.

The rotary Geneva drive part G may comprise a first pin 91 rigidly attached to the rotary Geneva drive part G and being configured for engagement with a first slot 92 of the first Geneva output rotary part G1 and may comprise a second pin 93 (see Fig. 9b) rigidly attached to the rotary Geneva drive part G and being configured for engagement with a second slot 94 of the second Geneva output rotary part G2.

A first push rod 102 is coupled between the first Geneva output rotary part G1 and a first arm 104 of a first angular lever 105. A second arm 106 of the first angular lever 105 is coupled to an elongated latch bar 15 configured for linear motion and configured for engagement with a stationary latch fitting (not shown) of the door structure (not shown). A second push rod 112 is coupled between the second Geneva output rotary part G2 and a crank arm 114 of a rotatable lock member 17. The rotatable lock member 17 is configured to lock the elongated latch bar 15, which configuration not being shown but involves that the rotatable lock member can engage the elongated latch bar for locking, when the elongated latch bar 15 has latched the stationary latch fitting.

The rotary Geneva drive part G rotates by means of an electrical rotary motor (not shown) for latching and locking the door structure 5. The first pin 91 comes into engagement with the first slot 92 as shown in Fig. 9a.

Further rotation of the rotary Geneva drive part G implies that the first pin 91 propels the first Geneva output rotary part G1 as it engages the first slot 92. The first push rod 102 moves the elongated latch bar 15 via the first angular lever 105, as shown in Fig. 9b.

In Fig. 9c is shown that the first pin 91 has leaved the first slot 92, whereby an elevated circular blocking disc 82 formed on a first drive wheel face 84 of the rotary Geneva drive part G holds the first Geneva output rotary part G1 in a first holding position. The first holding position implies that the elevated circular blocking disc 82 engages a corresponding first surface V1 of the first Geneva output rotary part G1. The elongated latch bar 15 has been fully moved into the latching position.

In Fig. 9d is shown that as the rotary Geneva drive part G proceeds to rotate, the second pin 93 will come into engagement with the second slot 94.

In Fig. 9e is shown how the second pin 93 of the rotary Geneva drive part G is in engagement with the second slot 94 and accordingly propels the second Geneva output rotary part G2. The second push rod 112 moves the crank arm 114 of the rotatable lock member 17 and rotates the rotatable lock member 17 to a locking position or second holding position, in which second holding position the elevated circular blocking disc 82 engages a corresponding second surface V2 of the second Geneva output rotary part G2.

The present invention is of course not in any way restricted to the examples described above, but many possibilities to modifications, or combinations of the described examples, thereof should be apparent to a person with ordinary skill in the art without departing from the basic idea of the invention as defined in the appended claims. The single rotary electrical motor may be replaced by a single action handle mechanism or other actuator device.

## Claims

1. An aerial vehicle (1) comprising a fuselage skin structure (3) and at least a door structure (5), which is configured to be closable arranged in an aperture (7) of the fuselage skin structure (3) and secured to the fuselage skin structure (3), the fuselage skin structure (3) comprises an aperture perimeter (9) surrounding the aperture (7), at least one stationary latch fitting (11) is arranged at the door structure (5), wherein at least a portion of the aperture perimeter (9) comprises;
- a door latch fitting securing device (13) comprising at least one elongated latch bar (15) configured for linear motion and engagement with the stationary latch fitting (11) in a latched position when the door structure (5) is closed; **characterised by**:
- the door latch fitting securing device (13) further comprises a rotatable lock member (17) configured for rotary motion for engagement with and for locking the elongated latch bar (15) in the latched position;
- an actuator device (19) is coupled to the door latch fitting securing device (13) via a translation mechanism (21) configured to convert rotary motion of the actuator device (19) into said linear motion and into said rotary motion.

2. The aerial vehicle (1) according to claim 1, **wherein** the translation mechanism (21) comprises a-rotary drive part (51), which is configured to drive a first driven part (53) and which is configured to drive a second driven part (55), each part being configured to be intermittently and independently driven.

3. The aerial vehicle (1) according to claim 2, **wherein** the rotary drive part (51) comprises a drive wheel (52) or a drive crank of a Geneva mechanism.

4. The aerial vehicle (1) according to any of the preceding claims, **wherein** the elongated latch bar (15) comprises a recess (57) exposing an engagement surface (58) configured for engagement with the stationary latch fitting (11).

5. The aerial vehicle (1) according to claim 4, **wherein** the rotatable lock member (17) is configured to be moved into the recess (57) of the elongated latch bar (15) for locking the elongated latch bar (15) in the latched position.

6. A method of securing a door structure (5) to a fuselage skin structure (3) of an aerial vehicle (1), the door structure (5) is configured to be closable arranged in an aperture (7) of the fuselage skin structure (3), which comprises an aperture perimeter (9) surrounding the aperture (7), at least one stationary latch fitting (11) is arranged at the door structure (5), at least a portion of the aperture perimeter (9) comprises a door latch fitting securing device (13) arranged to the aperture perimeter (9) and comprising at least one elongated latch bar (15) configured for linear motion for engagement with the stationary latch fitting (11) in a latched position when the door structure (5) is closed, the door latch fitting securing device (13) further comprises a rotatable lock member (17) configured for rotary motion for engagement with and for locking the elongated latch bar (15) in the latched position, an actuator device (19) is coupled to the door latch fitting securing device (13) via a translation mechanism (21) configured to convert rotary driving motion of the actuator device (19) into the linear motion and into the rotary motion, the method **comprises the steps of:**
- closing the door structure (5);
- activating the actuator device (19);
- converting the rotary driving motion of the actuator device (19) into the linear motion in a first intermittent motion;
- converting the rotary driving motion of the actuator device (19) into the rotary motion in a second intermittent motion; wherein
- the first intermittent motion precedes the second intermittent motion.

7. The method according to claim 6, wherein the translation mechanism (21) comprises a rotary drive part (51) associated with or coupled to a first driven part (53) and to a second driven part (55), the method comprises the steps of:
- rotating the rotary drive part (51);
- bringing into motion the first driven part (53) by means of the rotary drive part (51) for moving the elongated latch bar (15) into a first position during a first holding period;
- holding in the first position the elongated latch bar (15); and
- bringing into motion the second driven part (55) by means of the rotary drive part (51) for moving the rotatable lock member (17) into a second position during a second holding period.

8. The method according to claim 7, wherein the rotary drive part (51) comprises a first pin (91) configured for engagement with a first slot (92) of the first driven part (53) and comprises a second pin (93) configured for engagement with a second slot (94) of the second driven part (55); wherein the method comprises the steps of:
- entering the first pin (91) into the first slot (92) for providing the first intermittent motion of the first driven part (53) into the first position; and
- entering the second pin (93) into the second slot (94) for providing the second intermittent motion of the second driven part (55) into the second position.

## Patentansprüche

1. Luftfahrzeug (1), umfassend ein Rumpfhautstruktur (3) und mindestens eine Türstruktur (5), die dazu konfiguriert ist, schließbar in einer Öffnung (7) der Rumpfhautstruktur (3) angeordnet und an der Rumpfhautstruktur (3) gesichert zu sein, wobei die Rumpfhautstruktur (3) einen Öffnungsumfang (9) umfasst, der die Öffnung (7) umgibt, wobei mindestens eine ortsfeste Verriegelungsarmatur (11) an der Türstruktur (5) angeordnet ist, wobei mindestens ein Abschnitt des Öffnungsumfangs (9) umfasst:
- eine Türverriegelungsarmatursicherungsvorrichtung (13), die mindestens eine längliche Verriegelungsstange (15) umfasst, die für eine lineare Bewegung und einen Eingriff mit der ortsfesten Verriegelungsarmatur (11) in einer verriegelten Position, wenn die Türstruktur (5) geschlossen ist, konfiguriert ist;
**dadurch gekennzeichnet, dass**:
- die Türverriegelungsarmatursicherungsvorrichtung (13) ferner ein drehbares Blockierungselement (17) umfasst, das für eine Drehbewegung zum Eingriff in und zum Blockieren der länglichen Verriegelungsstange (15) in der verriegelten Position konfiguriert ist;
- eine Stellgliedvorrichtung (19) mit der Türverriegelungsarmatursicherungsvorrichtung (13) über einen Verschiebungsmechanismus (21) gekoppelt ist, der dazu konfiguriert ist, die Drehbewegung der Stellgliedvorrichtung (19) in die lineare Bewegung und in die Drehbewegung umzuwandeln.

2. Luftfahrzeug (1) nach Anspruch 1, wobei der Verschiebungsmechanismus (21) einen Drehantriebsteil (51) umfasst, der dazu konfiguriert ist, einen ersten angetriebenen Teil (53) anzutreiben, und der dazu konfiguriert ist, einen zweiten angetriebenen Teil (55) anzutreiben, wobei jeder Teil dazu konfiguriert ist, intermittierend und unabhängig angetrieben zu werden.

3. Luftfahrzeug (1) nach Anspruch 2, wobei der Drehantriebsteil (51) ein Antriebsrad (52) oder eine Antriebskurbel eines Malteserkreuzgetriebes umfasst.

4. Luftfahrzeug (1) nach einem der vorhergehenden Ansprüche, wobei die längliche Verriegelungsstange (15) eine Vertiefung (57) umfasst, die eine Eingriffsfläche (58) freilegt, die zum Eingriff mit der ortsfesten Verriegelungsarmatur (11) konfiguriert ist.

5. Luftfahrzeug (1) nach Anspruch 4, wobei das drehbare Blockierungselement (17) dazu konfiguriert ist, in die Vertiefung (57) der länglichen Verriegelungsstange (15) bewegt zu werden, um die längliche Verriegelungsstange (15) in der verriegelten Position zu blockieren.

6. Verfahren zum Sichern einer Türstruktur (5) an einer Rumpfhautstruktur (3) eines Luftfahrzeugs (1), wobei die Türstruktur (5) dazu konfiguriert ist, in einer Öffnung (7) der Rumpfhautstruktur (3), die einen Öffnungsumfang (9) umfasst, der die Öffnung (7) umgibt, schließbar angeordnet zu sein, wobei mindestens eine ortsfeste Verriegelungsarmatur (11) an der Türstruktur (5) angeordnet ist, wobei mindestens ein Abschnitt des Öffnungsumfangs (9) eine Türverriegelungsarmatursicherungsvorrichtung (13) umfasst, die an dem Öffnungsumfang (9) angeordnet ist und mindestens eine längliche Verriegelungsstange (15) umfasst, die für eine lineare Bewegung zum Eingriff mit der ortsfesten Verriegelungsarmatur (11) in einer verriegelten Position, wenn die Türstruktur (5) geschlossen ist, konfiguriert ist, wobei die Türverriegelungsarmatursicherungsvorrichtung (13) ferner ein drehbares Blockierungselement (17) umfasst, das für eine Drehbewegung zum Eingriff mit und zum Blockieren der länglichen Verriegelungsstange (15) in der verriegelten Position konfiguriert ist, wobei eine Stellgliedvorrichtung (19) mit der Türverriegelungsarmatursicherungsvorrichtung (13) über einen Verschiebungsmechanismus (21) gekoppelt ist, der dazu konfiguriert ist, die Drehantriebsbewegung der Stellgliedvorrichtung (19) in die lineare Bewegung und in die Drehbewegung umzuwandeln, wobei das Verfahren folgende Schritte umfasst:
- Schließen der Türstruktur (5);
- Aktivieren der Stellgliedvorrichtung (19);
- Umwandeln der Drehantriebsbewegung der Stellgliedvorrichtung (19) in die lineare Bewegung in einer ersten intermittierenden Bewegung;
- Umwandeln der Drehantriebsbewegung der Stellgliedvorrichtung (19) in die Drehbewegung in einer zweiten intermittierenden Bewegung; wobei
- die erste intermittierende Bewegung der zweiten intermittierenden Bewegung vorhergeht.

7. Verfahren nach Anspruch 6, wobei der Verschiebungsmechanismus (21) einen Drehantriebsteil (51) umfasst, der einem ersten angetriebenen Teil (53) und einem zweiten angetriebenen Teil (55) zugeordnet oder damit gekoppelt ist, wobei das Verfahren folgende Schritte umfasst:
- Drehen des Drehantriebsteils (51);
- Inbewegungsetzen des ersten angetriebenen Teils (53) anhand des Drehantriebsteils (51), um die längliche Verriegelungsstange (15) während einer ersten Halteperiode in eine erste Position zu bewegen;
- Halten der länglichen Verriegelungsstange (15) in der ersten Position; und
- Inbewegungsetzen des zweiten angetriebenen Teils (55) anhand des Drehantriebsteils (51), um das drehbare Blockierungselement (17) während einer zweiten Halteperiode in eine zweite Position zu bewegen.

8. Verfahren nach Anspruch 7, wobei der Drehantriebsteil (51) einen ersten Stift (91) umfasst, der zum Eingriff mit einem ersten Schlitz (92) des ersten angetriebenen Teils (53) konfiguriert ist, und einen zweiten Stift (93) umfasst, der zum Eingriff mit einem zweiten Schlitz (94) des zweiten angetriebenen Teils (55) konfiguriert ist; wobei das Verfahren folgende Schritte umfasst:
- Einbringen des ersten Stifts (91) in den ersten Schlitz (92) zum Bereitstellen der ersten intermittierenden Bewegung des ersten angetriebenen Teils (53) in die erste Position; und
- Einbringen des zweiten Stifts (93) in den zweiten Schlitz (94) zum Bereitstellen der zweiten intermittierenden Bewegung des zweiten angetriebenen Teils (55) in die zweite Position.

## Revendications

1. Véhicule aérien (1) comprenant une structure de revêtement de fuselage (3) et au moins une structure de porte (5) qui est configurée pour pouvoir être fermée disposée dans une ouverture (7) de la structure de revêtement de fuselage (3) et fixée à la structure de revêtement de fuselage (3), la structure de revêtement de fuselage (3) comprenant un périmètre d'ouverture (9) entourant l'ouverture (7), au moins une ferrure de verrouillage stationnaire (11) étant disposée au niveau de la structure de porte (5), dans laquelle au moins une partie du périmètre d'ouverture (9) comprend ;
- un dispositif de fixation de ferrure de verrouillage de porte (13) comprenant au moins une barre de verrouillage allongée (15) configurée pour un mouvement linéaire et une mise en prise avec la ferrure de verrouillage stationnaire (11) dans une position verrouillée lorsque la structure de porte (5) est fermée ; **caractérisé en ce que** :
- le dispositif de fixation de ferrure de verrouillage de porte (13) comprend en outre un élément de verrouillage rotatif (17) configuré pour un mouvement rotatif pour s'engager avec et pour verrouiller la barre de verrouillage allongée (15) dans la position verrouillée ;
- un dispositif actionneur (19) est couplé au dispositif de fixation de ferrure de verrouillage de porte (13) via un mécanisme de translation (21) configuré pour convertir un mouvement rotatif du dispositif actionneur (19) en ledit mouvement linéaire et en ledit mouvement rotatif.

2. Véhicule aérien (1) selon la revendication 1, **dans lequel** le mécanisme de translation (21) comprend une partie d'entraînement rotative (51) qui est configurée pour entraîner une première partie entraînée (53) et qui est configurée pour entraîner une deuxième partie entraînée (55), chaque partie étant configurée pour être entraînée par intermittence et indépendamment.

3. Véhicule aérien (1) selon la revendication 2, **dans lequel** la partie d'entraînement rotative (51) comprend une roue d'entraînement (52) ou une manivelle d'entraînement d'un mécanisme de Geneva.

4. Véhicule aérien (1) selon l'une quelconque des revendications précédentes, **dans lequel** la barre de verrouillage allongée (15) comprend un évidement (57) exposant une surface d'engagement (58) configurée pour un engagement avec la ferrure de verrouillage stationnaire (11).

5. Véhicule aérien (1) selon la revendication 4, **dans lequel** l'élément de verrouillage rotatif (17) est configuré pour être déplacé dans l'évidement (57) de la barre de verrouillage allongée (15) pour verrouiller la barre de verrouillage allongée (15) dans la position verrouillée.

6. Procédé de fixation d'une structure de porte (5) à une structure de revêtement de fuselage (3) d'un véhicule aérien (1), la structure de porte (5) étant configurée pour pouvoir être fermée disposée dans une ouverture (7) de la structure de revêtement de fuselage (3) qui comprend un périmètre d'ouverture (9) entourant l'ouverture (7), au moins une ferrure de verrouillage stationnaire (11) étant disposée au niveau de la structure de porte (5), au moins une partie du périmètre d'ouverture (9) comprenant un dispositif de fixation de ferrure de verrouillage de porte (13) disposé sur le périmètre d'ouverture (9) et comprenant au moins une barre de verrouillage allongée (15) configurée pour un mouvement linéaire pour s'engager avec la ferrure de verrouillage stationnaire (11) dans une position verrouillée lorsque la structure de porte (5) est fermée, le dispositif de fixation de ferrure de verrouillage de porte (13) comprenant en outre un élément de verrouillage rotatif (17) configuré pour un mouvement rotatif pour s'engager avec et verrouiller la barre de verrouillage allongée (15) dans la position verrouillée, un dispositif actionneur (19) étant couplé au dispositif de fixation de ferrure de verrouillage de porte (13) par l'intermédiaire d'un mécanisme de translation (21) configuré pour convertir le mouvement d'entraînement rotatif du dispositif actionneur (19) en le mouvement linéaire et en le mouvement rotatif, le procédé **comprenant les étapes consistant** à :
- fermer la structure de porte (5) ;
- activer le dispositif actionneur (19) ;
- convertir le mouvement d'entraînement rotatif du dispositif actionneur (19) en le mouvement linéaire dans un premier mouvement intermittent ;
- convertir le mouvement d'entraînement rotatif du dispositif actionneur (19) en le mouvement rotatif dans un deuxième mouvement intermittent ;
- le premier mouvement intermittent précédant le deuxième mouvement intermittent.

7. Procédé selon la revendication 6, dans lequel le mécanisme de translation (21) comprend une partie d'entraînement rotative (51) associée à ou couplée à une première partie entraînée (53) et à une deuxième partie entraînée (55), le procédé comprenant les étapes consistant à :
- faire tourner la partie d'entraînement rotative (51) ;
- mettre en mouvement la première partie entraînée (53) au moyen de la partie d'entraînement rotative (51) pour déplacer la barre de verrouillage allongée (15) dans une première position pendant une première période de maintien ;
- maintenir dans la première position la barre de verrouillage allongée (15) ; et
- mettre en mouvement la deuxième partie entraînée (55) au moyen de la partie d'entraînement rotative (51) pour déplacer l'élément de verrouillage rotatif (17) dans une deuxième position pendant une deuxième période de maintien.

8. Procédé selon la revendication 7, dans lequel la partie d'entraînement rotative (51) comprend une première broche (91) configurée pour s'engager avec une première fente (92) de la première partie entraînée (53) et comprend une deuxième broche (93) configurée pour s'engager avec une deuxième fente (94) de la deuxième partie entraînée (55) ; dans lequel le procédé comprend les étapes consistant à :
- introduire la première broche (91) dans la première fente (92) pour fournir le premier mouvement intermittent de la première partie entraînée (53) dans la première position ; et
- introduire la deuxième broche (93) dans la deuxième fente (94) pour fournir le deuxième mouvement intermittent de la deuxième partie entraînée (55) dans la deuxième position.
